# EUROPÄISCHE PATENTSCHRIFT

(11) **EP 0 771 905 B1**
(45) Veröffentlichungstag und Bekanntmachung des Hinweises auf die Patenterteilung: **13.06.2001**
(21) Anmeldenummer: 96116465.4
(22) Anmeldetag: 15.10.1996
(51) Int. Cl.: D21G 1/02, F16C 13/00

(54) **Durchbiegungssteuerbare Walze für einen Kalander o. dgl.**
Controlled deflection roll for a calender or the like
Rouleau à réglage de la flexion pour une calandre ou similaire

(30) Priorität: 02.11.1995 DE 19540791
(43) Veröffentlichungstag der Anmeldung: 07.05.1997
(73) Patentinhaber: Voith Paper Patent GmbH, 89522 Heidenheim (DE)
(72) Erfinder: van Haag, Rolf, Dr., 47647 Kerken (DE)
(74) Vertreter: Knoblauch, Ulrich, Dr.-Ing.

(56) Entgegenhaltungen:
- EP-A- 0 347 549
- EP-A- 0 384 173
- DE-C- 4 011 826
- US-A- 4 212 504

## Beschreibung

Die Erfindung bezieht sich auf eine durchbiegungssteuerbare Walze für einen Kalander o.dgl., bei der ein Walzenmantel mit Hilfe von hydrostatischen Stützelementen an einem den Walzenmantel durchsetzenden, drehfest gelagerten Träger abgestützt ist und die Stützelemente in ihrer der Mantelinnenfläche zugewandten Stützfläche mindestens eine Tasche aufweisen und mit einer dem Träger zugewandten Druckfläche einen Druckraum begrenzen, der einerseits mit einer Druckmittelzuleitung und andererseits über eine Drossel mit der Tasche in Verbindung steht, wobei die Stützelemente als Ringelemente mit ringförmiger Tasche und ringförmiger Druckfläche ausgebildet sind und wobei der vom Ringelement umschlossene Innenraum mit einer ein Schaltventil mit nur einer Schließstellung und einer Öffnungsstellung aufweisenden Ablaufleitung in Verbindung steht, nach DE 44 29 499 C1.

Die aus dem Stammpatent ersichtliche Walze erlaubt einen breiten Einstellbereich der Stützkraft und benötigt hierfür lediglich eine Druckmittelzuleitung und eine Ablaufleitung pro Stützelement. Eine weitere Vereinfachung besteht darin, dem einstellbaren Drosselorgan lediglich zwei Stellungen, nämlich eine Schließstellung und eine Öffnungsstellung zu geben. Man kann dann verhältnismäßig einfach gestaltete Schaltventile verwenden.

Der Erfindung liegt die Aufgabe zugrunde, eine besonders einfache und betriebssichere Art der Beeinflussung des Innenraumdrucks der Stützelemente anzugeben.

Diese Aufgabe wird erfindungsgemäß dadurch gelöst, daß das Schaltventil in der Ablaufleitung ein zur Ablaufseite hin öffnendes Rückschlagventil ist, dessen Ablaufseite wahlweise mit einem Öffnungsdruck unterhalb des Innenraumdrucks oder mit einem Sperrdruck oberhalb des Innenraumdrucks beaufschlagbar ist.

Das Schaltventil wird daher rein hydraulisch angesteuert. Herrscht auf der Ablaufseite Öffnungsdruck, kann Druckflüssigkeit aus dem Innenraum abfließen und ein entsprechend niedriger Innenraumdruck herrschen. Wird allerdings die Ablaufseite mit Sperrdruck beaufschlagt, schließt das Schaltventil und der Innenraumdruck nimmt einen Wert an, der annähernd dem Taschendruck entspricht. Hierfür sind keine zusätzlichen Steuerleitungen vorzusehen. Vielmehr kann der steuernde Druck über die Ablaufleitung wirksam gemacht werden.

Besonders günstig ist es, daß die Ablaufleitungen einer Gruppe von Stützelementen, deren Druckräume individuell mit Druckmittel versorgbar sind, mit einer gemeinsamen Ablaufleitung verbunden sind, die mit Hilfe eines Umschalters wahlweise mit einer Drucksenke, die einen Öffnungsdruck unterhalb des kleinsten Innenraumdrucks führt, oder mit einer Druckquelle, die einen Sperrdruck oberhalb des größten Innenraumdrucks führt, verbindbar ist. Es befindet sich daher in jeder Einzel-Ablaufleitung ein Schaltventil. Bei Zuführung des Sperrdrucks werden alle Schaltventile geschlossen, wodurch die Innenräume der Stützelemente druckmäßig voneinander entkoppelt sind. Ihr Druck folgt daher der individuellen Druckeinstellung des über die Druckmittelzuleitung zugeführten Druckmittels.

Eine solche Bauweise ermöglicht eine Konstruktion, bei der die gemeinsame Ablaufleitung durch eine Axialbohrung im Träger gebildet ist, in die die quer verlaufende Einzel-Ablaufleitungen, in die Rückschlagventile eingesetzt sind, münden. Da die Rückschlagventile nicht zugänglich sein müssen und auch sehr klein ausgebildet sein können, lassen sie sich ohne Schwierigkeiten in den querverlaufenden Einzel-Ablaufleitungen unterbringen. In Längsrichtung des Trägers braucht daher keine Vielzahl von Einzel-Ablaufleitungen zu verlaufen. Es genügt eine gemeinsame Ablaufleitung etwas größeren Querschnitts für die Gruppe.

Noch weitere Ersparnisse ergeben sich, wenn der Umschalter außerhalb des Trägers angeordnet ist. Er braucht lediglich mit der gemeinsamen Ablaufleitung verbunden zu werden.

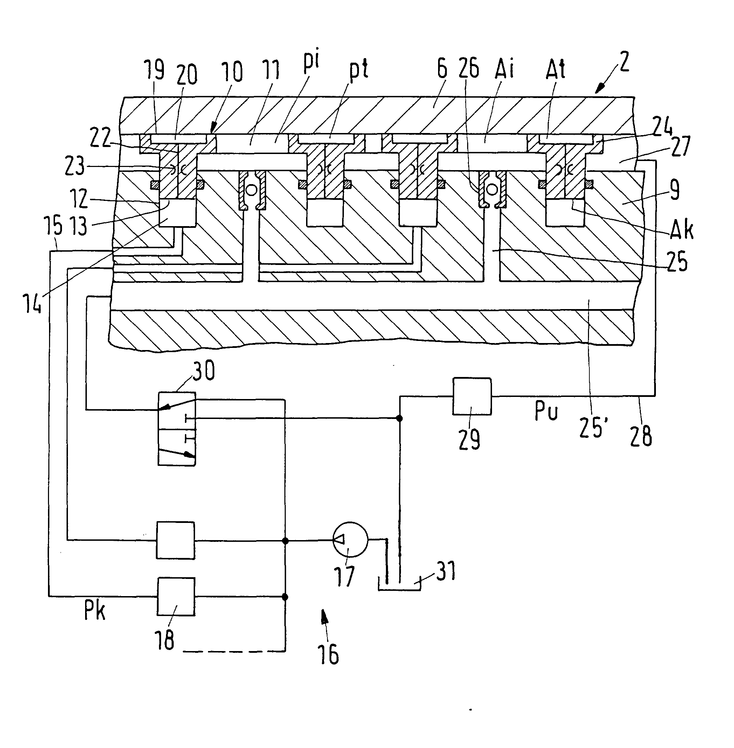

Die Erfindung wird nachstehend anhand eines in der Zeichnung dargestellten, bevorzugten Ausführungsbeispiels näher erläutert. Die einzige Figur zeigt einen Teillängsschnitt durch eine erfindungsgemäße Walze mit zugehöriger Schaltung.

Zum besseren Verständnis wird auf das Stammpatent 44 29 499 verwiesen. Nachstehend werden, soweit möglich, dieselben Bezugszeichen wie dort benutzt.

Eine Walze 2 weist einen Walzenmantel 6 auf, der mit Hilfe von Stützelementen 10 auf einem drehfest gehaltenen Träger 9 abgestützt ist. Das Stützelement 10 ist ein Ringelement, das einen Innenraum 11 umschließt. Es ist in einer Ringnut 12 abgedichtet geführt, die einen durch eine Druckfläche 13 begrenzten Druckraum 14 bildet. Dieser ist über eine Zuleitung 15 mit einer Druckflüssigkeitsquelle 16, hier dargestellt durch eine Pumpe 17 und eine Druckregelventilanordnung 18, verbunden. Über die Zuleitungen 15 wird den einzelnen Stützelementen 10 Druckflüssigkeit mit einem individuell wählbaren Druck pk zugeführt. Das Ringelement 11 weist eine Stützfläche 19 auf, welche der Innenfläche des Walzenmantels 6 zugewandt ist, und trägt eine ringförmige Tasche 20, die den Innenraum 11 praktisch vollständig umschließt und durch schmale Querstege in mehrere Taschenabschnitte unterteilt ist. Jeder Taschenabschnitt ist über eine Leitung 22, die mit einer Drossel 23 versehen ist, mit dem Druckraum 14 verbunden. Die Taschenfläche At ist etwas größer als die Druckfläche Ak. Zu diesem Zweck besitzt das Ringelement 11 im Taschenbereich eine Erweiterung 24.

Der Innenraum 11 jedes Stützelements 10 hat eine Querschnittsfläche Ai und ist über eine quer im Träger 9 verlaufende Ablaufleitung 25 mit einer gemeinsamen Ablaufleitung 25', die durch eine Axialbohrung gebildet wird, verbunden. In die Ablaufleitung 25 ist ein Rückschlagventil 26 eingebaut, das zur Ablaufseite hin öffnet und als Schaltventil wirkt. Zu diesem Zweck ist die gemeinsame Ablaufleitung 25' außerhalb des Trägers 9 mit einem Umschalter 30 verbunden, der die Ablaufseite des Rückschlagventils 26 wahlweise mit einem Sperrdruck von einer Druckquelle, hier der Pumpe 17, oder mit einem Öffnungsdruck von einer Drucksenke, hier dem Behälter 31, beaufschlagt.

Vorteilhaft ist hierbei, daß jedem Innenraum 11 ein Rückschlagventil 26 zugeordnet ist, das dafür sorgt, daß die Innenraumdrücke pi der einzelnen Stützelemente 10 voneinander entkoppelt sind und daher dem Taschendruck pt des betreffenden Stützelements 10 zu folgen vermögen. Dies steht im Gegensatz zu der konstruktiv noch einfacheren Lösung, bei der ein allen Stützelementen gemeinsames Rückschlagventil in der gemeinsamen Ablaufleitung 25' angeordnet ist, wobei aber eine solche Entkopplung nicht möglich ist.

Der Zwischenraum 27 ist über eine Rückleitung 28, die mit einem Druckregelventil 29 versehen ist, mit dem Behälter verbunden. Demzufolge kann im Zwischenraum 27 ein Druck pu aufrechterhalten werden.

Es sind nunmehr die folgenden Betriebsweisen möglich:
a) Die Rückschlagventile 26 sind geschlossen: Der jeweilige Taschendruck pt wirkt über die große Fläche At + Ai des Stützelements 10. Dieser Druck läßt sich mit Hilfe der Druckregelventilanordnung 18 für jedes Stützelement 10 einstellen.
b) Der Umschalter 30 nimmt die zweite Stellung ein. Die Rückschlagventile 26 sind geöffnet. Die Stützelemente 10 wirken nur mit der kleinen Fläche At. Entsprechend gering ist die jeweilige Stützkraft, die aber individuell eingestellt werden kann.

In beiden Fällen ist es möglich, den Druck pu im Zwischenraum 27 auf Null oder einen beliebigen anderen Wert einzustellen. Hierdurch werden zusätzliche Effekte erzielt, wie dies im Stammpatent beschrieben ist.

## Patentansprüche

1. Durchbiegungssteuerbare Walze (2) für einen Kalander o.dgl., bei der ein Walzenmantel (6) mit Hilfe von hydrostatischen Stützelementen (10) an einem den Walzenmantel durchsetzenden, drehfest gelagerten Träger abgestützt ist und die Stützelemente (10) in ihrer der Mantelinnenfläche zugewandten Stützfläche mindestens eine Tasche (20) aufweisen und mit einer dem Träger zugewandten Druckfläche einen Druckraum (14) begrenzen, der einerseits mit einer Druckmittelzuleitung und andererseits über eine Drossel mit der Tasche in Verbindung steht, wobei die Stützelemente (10) als Ringelemente mit ringförmiger Tasche und ringförmiger Druckfläche ausgebildet sind und wobei der vom Ringelement umschlossene Innenraum (11) mit einer ein Schaltventil mit nur einer Schließstellung und einer Öffnungsstellung aufweisenden Ablaufleitung (25, 25') in Verbindung steht, dadurch gekennzeichnet, daß das Schaltventil in der Ablaufleitung (25, 25') ein zur Ablaufseite hin öffnendes Rückschlagventil (26) ist, dessen Ablaufseite wahlweise mit einem Öffnungsdruck unterhalb des Innenraumdrucks (pi) oder mit einem Sperrdruck oberhalb des Innenraumdrucks beaufschlagbar ist.

2. Walze nach Anspruch 1, dadurch gekennzeichnet, daß die Ablaufleitungen (25) einer Gruppe von Stützelementen (10), deren Druckräume (14) individuell mit Druckmittel versorgbar sind, mit einer gemeinsamen Ablaufleitung (25') verbunden sind, die mit Hilfe eines Umschalters (30) wahlweise mit einer Drucksenke (Behälter 31), die einen Öffnungsdruck unterhalb des kleinsten Innenraumdrucks (pi) führt, oder mit einer Druckquelle (Pumpe 17), die einen Sperrdruck oberhalb des größten Innenraumdrucks führt, verbindbar ist.

3. Walze nach Anspruch 2,dadurch gekennzeichnet, daß die gemeinsame Ablaufleitung (25') durch eine Axialbohrung im Träger (9) gebildet ist, in die die quer verlaufende Einzel-Ablaufleitungen (25), in die Rückschlagventile (26) eingesetzt sind, münden.

4. Walze nach Anspruch 3, dadurch gekennzeichnet, daß der Umschalter (30) außerhalb des Trägers (9) angeordnet ist.

## Claims

1. Deflection-controllable roll (2) for a calender or the like, in which a roll shell (6) is supported with the aid of hydrostatic supporting elements (10) on a non-rotatably mounted support traversing the roll shell and the supporting elements (10) are provided on their supporting surfaces directed towards the inner face of the shell with at least one pocket (20) and together with a pressure surface directed towards the support delimit a pressure chamber (14) connected, on the one hand, to a hydraulic fluid supply line and, on the other hand, via a throttle to the pocket, the supporting elements (10) being in the form of annular elements with an annular pocket and an annular pressure surface and the interior space (11) enclosed by the annular element being connected to an outlet line (25, 25') having a control valve with only one closed position and one open position, characterised in that the control valve in the outlet line (25, 25') is a non-return valve (26) open towards the outlet side, to the outlet side of which can be applied either an opening pressure lower than the interior space pressure (pi) or a closing pressure higher than the interior space pressure.

2. Roll according to claim 1, characterised in that the outlet lines (25) of a group of supporting elements (10), the pressure chambers (14) of which can be supplied individually with hydraulic fluid, are connected to one common outlet line (25') which can be connected with the aid of a change-over switch (30) either to a pressure sink (container 31) with an opening pressure lower than the minimum interior space pressure (pi) or to a pressure source (pump 17) with a closing pressure higher than the maximum interior space pressure.

3. Roll according to claim 2, characterised in that the common outlet line (25') is formed by an axial bore in the support (9) into which open the transversely extending individual outlet lines (25) in which the non-return valves (26) are inserted.

4. Roll according to claim 3, characterised in that the change-over switch (30) is arranged outside the support (9).

## Revendications

1. Rouleau à flexion réglable (2) pour une calandre ou analogue, dans lequel une enveloppe de rouleau (6) est soutenue à l'aide d'éléments de soutien hydrostatiques (10) sur un support monté solidairement en rotation et traversant l'enveloppe de rouleau, et les éléments de soutien (10) comprennent au moins une poche (20) dans leur surface de soutien orientée vers la surface intérieure de l'enveloppe, et délimitent par une surface de pression orientée vers le support une chambre de compression (14) qui est en communication d'une part avec une conduite d'amenée de fluide sous pression et d'autre part avec la poche via un étranglement, les éléments de soutien (10) étant réalisés sous forme d'éléments annulaires comportant une poche annulaire et une surface de pression annulaire, et le volume intérieur (11) enfermé par l'élément annulaire étant en communication avec une conduite d'évacuation comprenant une valve de commutation à une seule position de fermeture et à une seule position d'ouverture, caractérisé en ce que la valve de commutation dans la conduite d'évacuation (25, 25') est un clapet anti-retour (26) s'ouvrant vers le côté évacuation, dont le côté évacuation est susceptible d'être sollicité au choix par une pression d'ouverture au-dessous de la pression du volume intérieur (pi) ou par une pression d'obturation au-dessus de la pression de volume intérieur.

2. Rouleau selon la revendication 1, caractérisé en ce que les conduites d'évacuation (25) d'un groupe d'éléments de soutien (10), dont les chambres de compression (14) peuvent être alimentées individuellement en fluide sous pression, sont reliées à une conduite d'évacuation commune (25') qui peut être reliée à l'aide d'un inverseur (30) au choix soit à une bâche de pression (récipient 31) qui présente une pression d'ouverture au-dessous de la pression de volume intérieur minimale (pi), soit à une source de pression (pompe 17) qui présente une pression d'obturation au-dessus de la pression de volume intérieur maximale.

3. Rouleau selon la revendication 2, caractérisé en ce que la conduite d'évacuation commune (25') est formée par un perçage axial dans le support (9), perçage dans lequel débouchent les conduites d'évacuation individuelles (25) qui s'étendent transversalement et dans lesquelles sont mis en place les clapets anti-retour (26).

4. Rouleau selon la revendication 3, caractérisé en ce que l'inverseur (30) est agencé à l'extérieur du support (9).
